# EUROPEAN PATENT APPLICATION

(11) **EP 4 844 584 A1**
(43) Date of publication of application: **25.11.2026**
(21) Application number: 26177236.2
(22) Date of filing: 07.05.2026
(51) Int. Cl.: G06F 11/07, G06F 11/20, G06F 11/14

(54) **DYNAMIC RUNTIME RECONFIGURATION OF A FUNCTIONAL MODULE CIRCUIT DURING PRESENCE OF A FAULT**

(30) Priority: 15.05.2025 RO 202500175
(71) Applicant: NXP B.V., 5656 AG Eindhoven (NL)
(72) Inventor: Kumar, Ashish, 5656AG Eindhoven (NL); Lee, Taehoon, 5656AG Eindhoven (NL); Vasile, Rares, 5656AG Eindhoven (NL)
(74) Representative: Schwarzweller, Thomas

(57) **Abstract**

Dynamic runtime configuration includes receiving a request from an application software executed by a master; determining based on an address in the request that a resource in the functional module circuit has a fault; translating the address in the request to an address of a backup resource; configuring a context of the backup resource with context of the faulty resource; performing the request by the backup resource; and providing a response to the request to the application software, where the application software is agnostic to the fault ensuring functional availability at runtime.

## Description

### FIELD OF USE

This disclosure generally relates to fault management, and more particularly to dynamic runtime reconfiguration of a functional module circuit during presence of a fault.

### BACKGROUND

A "functional module circuit" refers to a circuit that has intellectual property (IP) to performs a function and is integrated within a larger integrated circuit (IC) or system on a chip (SoC). The function could be associated with operation of an automobile as an example such as braking, steering, safety, or entertainment. The functional module circuit includes one or more resources such as timer channels (e.g., system timer modules (STM)), a communication controller such as Ethernet or Controller Area Network (CAN), direct memory access (DMA) resources or analog to digital converter (ADC) resources to facilitate performing the function. If a resource in the functional module circuit is determined to be unusable due to a fault, then the functional module circuit is degraded or placed in a safe state.

### BRIEF DESCRIPTION OF THE DRAWINGS

FIG. 1 illustrates an example block diagram of a system having one or more of a central and local hardware based safety management circuit (HSMC) in accordance with one or more embodiments.
FIG. 2 is an example detailed block diagram of reconfiguration of the functional module circuit in accordance with one or more embodiments.
FIG. 3 is another example detailed block diagram of reconfiguration of the functional module circuit in accordance with one or more embodiments.
FIG. 4 is an example block diagram of an address and data translation circuit (ADTC) in accordance with one or more embodiments.
FIG. 5 illustrates operation of the ADTC to reconfigure to reconfigure the system in accordance with one or more embodiments.
FIG. 6 illustrates another example of operation of the ADTC to reconfigure the system in accordance with one or more embodiments.
FIG. 7 is a flow chart of functions associated with dynamic runtime configuration in accordance with one or more embodiments.

The drawings are for the purpose of illustrating example embodiments, but it is understood that the embodiments are not limited to the arrangements and instrumentality shown in the drawings.

### DETAILED DESCRIPTION

The detailed description of the appended drawings is intended as a description of the various embodiments of the present disclosure, and is not intended to represent the only form in which the present disclosure may be practiced. It is to be understood that the same or equivalent functions may be accomplished by different embodiments that are intended to be encompassed within the spirit and scope of the present disclosure.

Embodiments disclosed herein are directed to reconfiguration of a system based on a fault in a resource of a functional module circuit. A local hardware based safety management circuit (HSMC) of one or more HSMC in a functional module circuit determines based on the indication of the fault in a resource of the functional module circuit a backup resource in the functional module circuit to remedy the fault. If the fault in the functional module circuit is not able to be remedied by the backup resource in the functional module circuit, a central HSMC determines a backup resource in another functional module circuit. In one or more embodiments, the local or central HSMC transfers context of the faulty resource to the backup resource. Then, a request from application software that is received by the local or central HSMC for the faulty resource of the functional module circuit is routed to the backup resource transparent to the application software to facilitate performing a function of the backup resource and a response is received which is provided back to the application software. In some embodiments, one or more of the request and response is converted to be compatible with the backup resource. The backup resource is able to perform the function by the faulty resource transparent to the application software. There may be no change to the request sent by the application software to access the functional module circuit and response received by the application software from the functional module circuit. The reconfiguration is performed in real time, without software intervention, and agnostic to the application software resulting in fast reconfiguration times, ensuring functional availability at runtime, and maintaining operational safety in the presence of a fault. Well known instructions, protocols, structures, and techniques have not been shown in detail in order not to obfuscate the description.

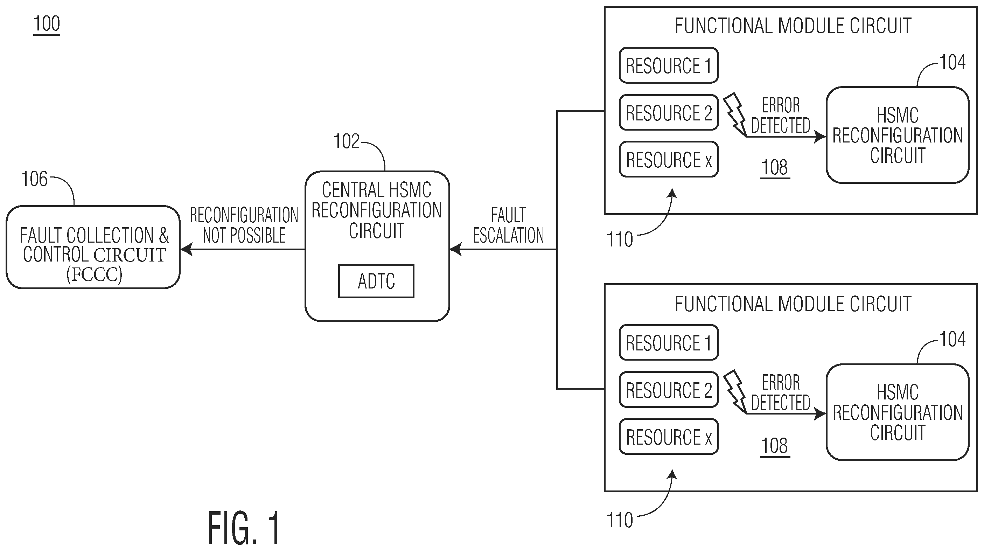

FIG. 1 illustrates an example block diagram of a system 100 having a hardware based safety management circuit (HSMC) in accordance with one or more embodiments. The system 100 such as a system-on-a chip (SoC) may include a central HSMC reconfiguration circuit 102, a fault collection and control circuit (FCCC) 106, and one or more functional module circuits 108 with a respective local HSMC 104. The "functional module circuit" refers to a circuit that is considered intellectual property (IP) that performs a function in the system 100 and is integrated within a larger integrated circuit (IC) or system on a chip (SoC). The function may be associated with operation of an automobile as an example such as braking, steering, safety, or entertainment but is not limited to use in automobiles, more generally to vehicles. Additionally, or alternatively, the example functions may be associated with operation in other domains such as industrial, communication, medical, energy, manufacturing etc. The functional module circuit 108 may include one or more resources 110 and include, for example, system timer modules (STM), an Ethernet controller, a Controller Area Network (CAN), a direct memory access (DMA) resource, or an analog-to-digital converter (ADC) resource to facilitate performing the function. In some embodiments, the functional module circuit 108 is not a memory circuit. The central HSMC 102 and local HSMC 104 are circuits arranged to perform dynamic reconfiguration of a functional module circuit 108 or system 100 without any software intervention of software executed outside the system 100 during the reconfiguration when the functional module circuit 108 has a fault. A fault is an abnormal state in the functional module circuit 108 which might be due to a hardware error or software error. The FCCC 106 may collect indications of faults for higher level processing including software or hardware reset of the functional module circuit 108 when the reconfiguration is not able to be performed. In one or more embodiments, the system 100 may be a safety critical system where operational faults need to be timely remedied to continue safe operation. The system 100 may be embedded in an electronic system (not shown) such as an automotive system, an aircraft guidance system, a home security system, among other systems and implemented with circuitry such as one or more of analog circuitry, mix signal circuitry, memory circuitry, logic circuitry, and processing circuitry that executes code stored in a memory that when executed by the processing circuitry performs the disclosed functions, among other implementations, on the system on a chip (SoC).

In one or more embodiments, a fault in a functional module circuit 108 is initially detected by a safety circuit in the local HSMC circuit 104 which attempts to isolate and reconfigure the functional module circuit 108 to resolve the fault. The reconfiguration might include replacing the faulty resource in the functional module circuit with a backup resource in the functional module circuit 108. The backup resource may allow the functional module circuit 108 to perform same functions as before the fault was generated. If the fault is not able to be resolved by the local HSMC circuit 104 by replacing the faulty resource, e.g., there are no backup resources available in the functional module circuit, then the fault is escalated to a circuit external to the functional module circuit 108 which attempts to resolve the fault at the system level. The circuit external to the functional module circuit that controls the functional module circuits in the system determines a backup resource in another functional module circuit. The circuit may be the central HSMC 102 which controls all of the functional module circuits in the system or an HSMC that controls a subset of functional module circuits. The resolution may be to replace the faulty resource in one functional module circuit 108 with a backup resource in another functional module circuit. The reconfiguration is performed in real time, without software intervention, and agnostic to the application software that may be sending requests to the faulty resource or receiving responses from the resources of the functional module circuit resulting in fast reconfiguration times and maintaining operational safety in the presence of a fault. If the fault is not able to be resolved by the circuit such as the central HSMC 102, then the FCCC 106 may perform the configured safety reaction such as a hardware reset or software reset of one or more of the functional module circuit 108 or the system 100 to resolve the fault.

In some embodiments, the system 100 may have one or more higher level HSMC which facilitate determining backup resources in a functional resource circuit of a group of functional module circuits in addition to or instead of a lower level HSMC such as the local HSMC. For example, the higher level HSMC but not the central HSMC may operate in a supervisory role to supervise actions by the lower level HSMC. The higher level HSMC may be arranged in a hierarchy between the central HSMC and the lower level HSMC such as the local HSMC and the central HSMC may facilitate determining backup resources in coordination with the one or more higher level HSMC and local HSMC.

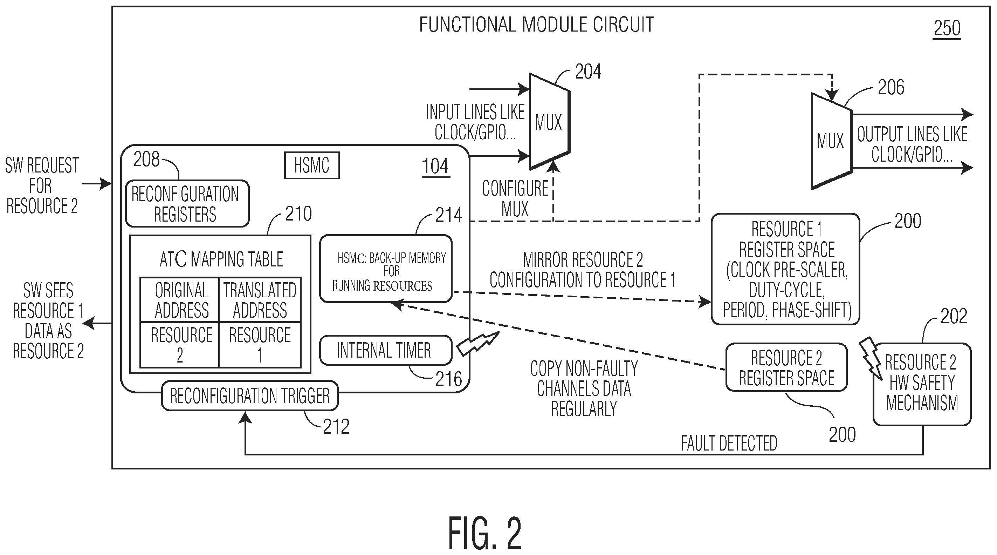

FIG. 2 is an example detailed block diagram of reconfiguration of a functional module circuit 250 in accordance with one or more embodiments. Each functional module circuit 250 has an existing group of resources. The functional module circuit 250 has the local HSMC 104, one or more register spaces 200 (e.g., where two register spaces are shown) and multiplexers 204, 206. The register spaces 200 may define a context of a respective resource in the functional module circuit 250, and the register spaces 200 may store parameters or configurations of the resource. For example, the register spaces 200 may be channel register spaces which store context in the form of timer parameters such as a clock prescaler, a duty cycle period, and phase shift and the resource may be a timer channel such as STM in this example that generates an interrupt at a particular time indicted by a respective timer. The multiplexer 204 may receive various input lines such as a clock line of a clock and general purpose input/output (GPIO) line from outside the functional module circuit 250 one of which is then selected for input to a resource in the functional module circuit 250 and similarly multiplexer 206 may receive an output from a resource in the functional module circuit 250 which is then output to a particular output line such as an interrupt line or GPIO line to a circuit outside the functional module circuit 250 in the system 100. The HSMC 104 may include reconfiguration registers 208, an address translation circuit (ATC) mapping table 210, a backup memory 214, internal timer 216, and a reconfiguration trigger 212. The reconfiguration registers 208 is programmed by software to indicate a back-up resource when the functional module circuit 104 has a faulty resource. It can also be list of back-up resources with high to low priority within the list for usage as a backup resource. The internal timer 216 may be a timer for tracking a period of time. The internal timer 216 may be used to determine timing for regular back-up of context for non-faulty resources (configured to have a back-up in case of failure). The backup memory 214 may store a copy of a register space of a resource which is periodically updated where the register space 200 indicates a configuration of the resource such as the context. The context may define a state of the resource. For example, the state of the STM may be a timer value and the state of an ADC may be a digital sample value that is converted at a particular point of time. This helps the HSMC 104 to restore the functional context of the faulty resource to the back-up resource instead of restarting the back-up resource from initial state, impacting the running application. The reconfiguration trigger 212 may be an input to the HSMC 104 which causes reconfiguration of the functional module circuit 250 when a signal is received at the input. The reconfiguration registers 208 may indicate the backup resource to the faulty resource. Further, the ATC mapping table 210 may translate a request received from the application software which directs from a faulty resource of the functional module circuit 250 to a backup resource causing transparency to the application software. The ATC mapping table 210 may store an address of a resource requested and an address of a backup resource to route the request from the faulty resource. The ATC mapping table 210 may be configured based on indication of backup resource stored in the reconfiguration registers 208. If the request is directed to a resource with no fault, the ATC mapping table 210 may not perform any translation of an address and the request will be provided to the directed resource. Each resource may also have a respective safety mechanism 202. The safety mechanism 202 may output a signal when a fault is detected in a resource of the functional module circuit to the reconfiguration trigger 212.

In one or more embodiments, the safety mechanism 202 may detect a fault. The fault may be in a channel of the functional module circuit 250 as an example. The safety mechanism 202 then sends a fault signal to the reconfiguration trigger 212. The reconfiguration trigger 212 indicates the fault that is detected to the HSMC 104. The HSMC 104 may perform reconfiguration of the functional module circuit 250 to remedy the fault. Based on the signal at the reconfiguration trigger 212, the reconfiguration registers 208 may be accessed to remedy the fault. The reconfiguration register 208 may identify a backup resource to the faulty resource. The reconfiguration of the functional module circuit 250 may be agnostic outside the functional module circuit and any isolation and protection mechanism like a memory protection unit (MPU) and Bus Access (ID on the bus) to access the functional module circuit 250 will remain the same. For example, if the fault is in a channel, the application software will continue to provide the same request with an address of the faulty channel to access the channel. The reconfiguration register 208 may identify a list of back-up resources. The back-up resource can be idle and available for use or allocated to another application software with lower criticality and may be used instead of the faulty resource. If the resource is allocated to another application software and then used as a backup to the faulty resource, the impacted application will be notified. For example, a masking bit in the functional module circuit 250 may indicate whether the resource is reallocated such as a used/free channel bit. Additionally, the faulty resource may be indicated as being faulty in the HSMC, e.g., by a masking bit, so that it is not used. The reconfiguration registers 208 program the ATC mapping table 210 which performs the reconfiguration. For example, the multiplexer 204 may be reconfigured to output any input lines to the functional module circuit to the backup resource rather than faulty resource and the multiplexer 206 may be configured to output to the output lines of the functional module circuit the output of the backup resource rather than faulty resource. Any request to a faulty resource by an application software is routed by the ATC mapping table 210 to the backup resource.

To further illustrate, if there is a fault in channel 2, then access to faulty channel 2 will be re-directed to channel 1 even though the application software external to the functional module circuit sends the request to the faulty channel 2. The ATC mapping table 210 translates the address of the faulty channel indicated in the request to the address of the backup channel and then routes the request to the backup channel in the functional module circuit 250. Further, the multiplexers 204, 206 are configured to output signals associated with the backup channel. The register space of the faulty channel stored in the backup memory 214 may be copied to the register space of the backup channel so that the backup channel has a context of the faulty channel.

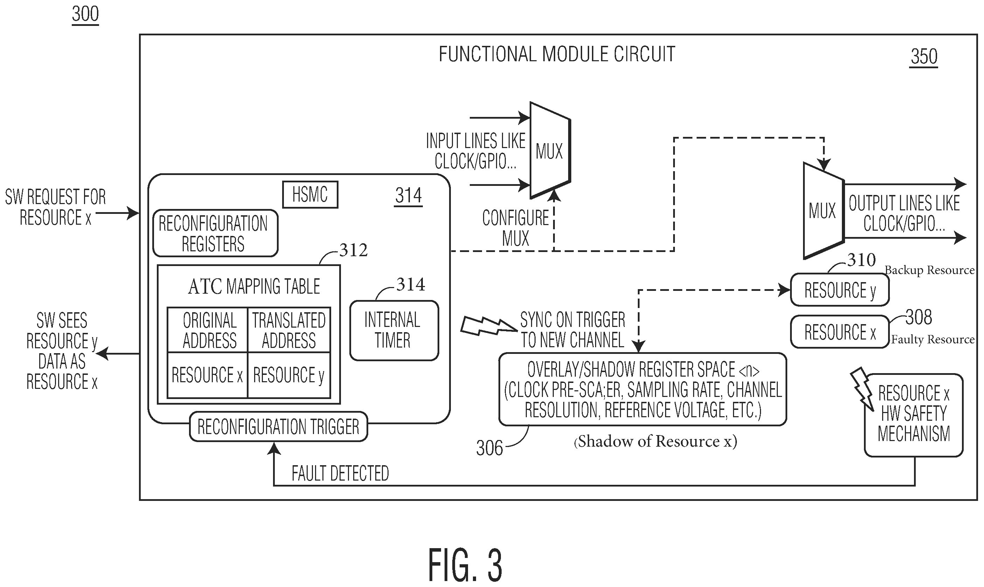

FIG. 3 is another example block diagram of reconfiguration of a functional module circuit 350 in accordance with one or more embodiments. Instead of the HSMC 104 having the backup memory 214 of the register spaces 200 of the resource updated periodically, the functional module circuit 350 may have a plurality of shadow register spaces 306 external to HSMC 314. Each shadow register space may be a mirror-image of a register space in a resource 308 storing a context of the resource. The shadow register space is present to enable reallocation of the register space in a resource in case of failure of the associated resource. By default, a register space of a resource of a functional module circuit 350 would be mapped to the shadow register space and a sync signal which is generated as the resource is accessed by the application software or as a result of an indication by an internal timer 314 causes the shadow register space to be synced with the register space of the resource (e.g., storing same context). During a fault of the resource, the shadow register space originally associated with the faulty resource 308 is synchronized to the register space of the backup resource 310 so that the backup resource has a context of the faulty resource. The context restored is instant and may be just before the fault occurred and be more recent than the context copied periodically in the functional module circuit 250 and which might be stale. The functional module circuit 350 may decide based on size and complexity of the functional module circuit 108 how many shadow register spaces are included in the plurality of shadow register space 306 and corresponding register spaces of resources that are backed up. In some embodiments, the register spaces of not all resources may be backed up because of restrictions of a number of shadow register spaces that are able to be maintained in the functional module circuit 350. Further, a self-test of those memories may be performed, as high risk of common cause failure, if failure is observed to ensure availability.

To illustrate, shadow register space x within 306 may be periodically synchronized with the register space of resource x 308 while resource x 308 is not faulty. External access to respective resource by the application software will also force a synchronization between the shadow register space x in 306 and register space x 308 in the resource. If resource x 308 is faulty, the current context of the register space in the faulty resource x 308 is retained in the shadow register space and synchronized to the register space in the backup resource y 310. The shadow register space of the backup resource y 310 will be then synchronized to mirror the register space in the resource y 310. Synchronization of the register space of a faulty resource is stopped when a faulty resource is signaled and access is transferred to the backup resource to replace the faulty resource. Then, any request to a faulty resource by application software is routed by the ATC mapping table 312 to the backup resource.

The system 100 may have an Address & Data Translation Circuit (ADTC) within the central HSMC 102 to reconfigure the system when the local HSMC is not able to replace a faulty resource in the functional module circuit with a backup resource in the functional module circuit to remedy the fault. Instead, a backup resource in another functional module circuit is identified by the central HSMC 102 to remedy the fault.

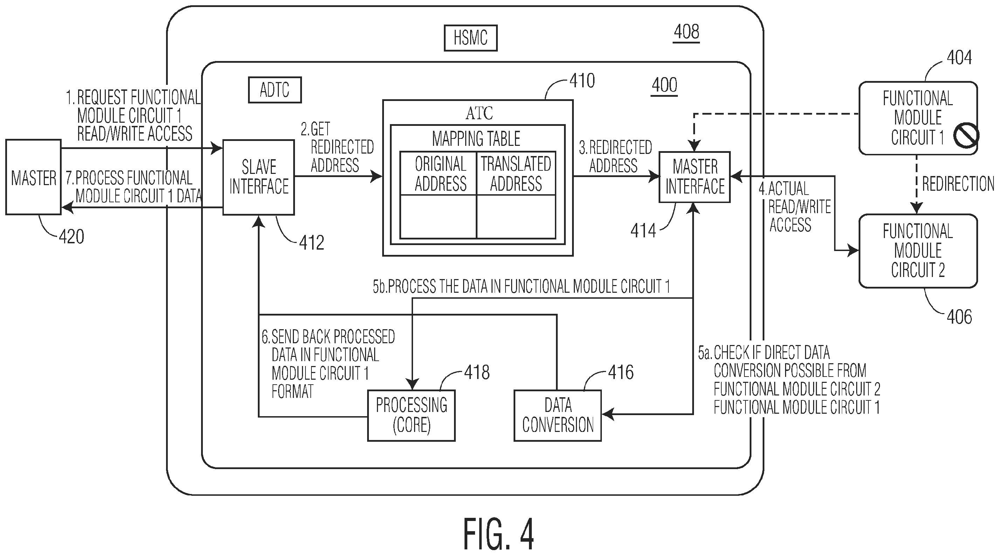

FIG. 4 is an example block diagram of the ADTC 400 in accordance with one or more embodiments. The ADTC 400 may be a circuit of the HSMC 408 or a separate entity triggered by the HSMC 408 when fault recovery cannot be done within the functional module circuit itself. In one or more embodiments, the HSMC 408 may be a central HSMC. The ADTC 400 may transition processing from one functional module circuit 404 with the faulty resource to a backup resource in the functional module circuit 406. The ADTC 400 may be arranged to route a request from the faulty resource of one functional module circuit to the backup resource in another functional module circuit within the system 100, e.g., faulty resource in functional module circuit 404 to backup resource in functional module circuit 406 within the SoC. The ADTC 400 may have a master interface 414, a slave interface 412, an ATC 410, a processing core 418, and a data conversion circuit 416. The slave interface 412 may receive requests from an external access by a master 420 such as a read or write access by application software to the functional module circuit 404 and provide processed data from the functional module circuit 404 as an output to the master 420. The master interface 414 may receive data from the functional module circuit 404, 406 or provide data to the functional module circuit 404, 406. Additionally, the master interface 414 may receive an indication of context of the resource of the functional module circuit 404, 416 stored in a register space of the resource using the methods explained with respect to 250,350. In one or more embodiments, the backup resource may perform a same function as the faulty resource in a different way. The hardware safety management circuit may further be arranged to convert an output of the backup resource to match an output of the faulty resource such that it would appear the request was provided to the faulty resource instead of the backup resource. The processing core 418 may perform data conversions such as changing from CAN protocol to Ethernet protocol formats, translating timer data from STM to another timer peripheral like periodic interrupt timer (PIT), or translating ADC data from from successive approximation register (SAR) ADC to sigma-delta (SD) ADC depending on the resource in the functional module circuit. The data conversion circuit 416 may store a memory-based lookup table to change a format of data of one resource to another format. The data conversion circuit 416 may perform lookup table based conversions and the processing core 418 may perform more complex data conversions.

To illustrate, in one or more embodiments, a master 420 executing application software may send a request which is received at the slave interface 412 of the ADTC 400. The request may be to perform a read or write access and indicate an address of the resource in the functional module circuit 404 to perform the request. Upon fault of the addressed resource in the functional module circuit 404, a redirected address is obtained from the ATC 410. The redirected address is an address of a backup resource in the functional module circuit 406 when the resource in the functional module circuit 404 indicated in the request is faulty. Further, the backup resource of the functional module circuit 406 may be arranged to collect the context of the faulty resource in the functional module 404 using mechanism like back-up memory 214 in 250 or shadow register space 306 in 350. The master interface 414 provides based on the redirected address the read or write request from the master 420 to the backup resource in the functional module circuit 406 instead of to the faulty resource in the functional module circuit 404 which the request originally indicated. If the backup resource in the functional module circuit 404 outputs data such as a result of a read request, a determination is made by the master interface 414 whether the data is to be converted by the data conversion circuit 416 and/or processing core 418 and provides the data to the data conversion circuit and/or core so that the format corresponds to the request. For example, if the request received was to the faulty resource of the functional module circuit 404 which is an Ethernet circuit and the backup resource of the functional module circuit 406 that provided the response is a CAN circuit, then the CAN protocol data provided by the CAN circuit is converted to Ethernet data protocol. The converted data is then provided to the slave interface 412 which outputs the data to the master 420 which provided the request. If the request is a write request, the master interface 414 which receives the request may convert the data to be written in the request to a format compatible with the backup resource. The master interface 414 may determine whether the data is to be converted by the data conversion circuit 416 and/or processing core 418 and provides the data to the data conversion circuit 416 and/or core 418 for conversion (e.g., CAN protocol data to Ethernet protocol data) so that the format corresponds to the request which is then received back and provided to the backup resource 406 to complete the write request. The execution of the request by the backup resource of the functional module circuit 406 instead of the faulty resource in the functional module circuit 404 is transparent to the application software of the master 420 issuing the request.

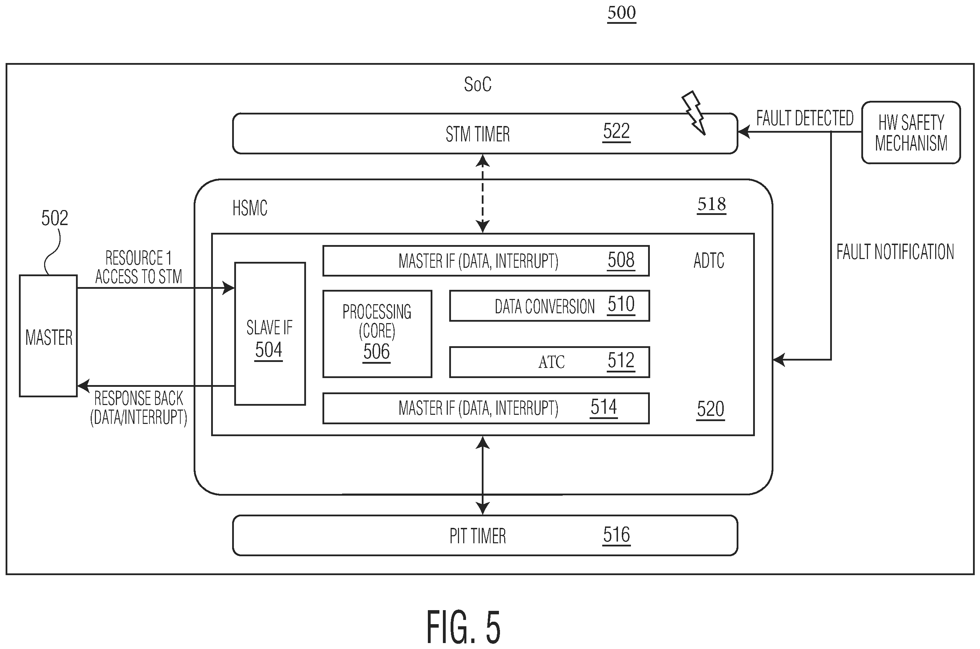

FIG. 5 illustrates example operation of the ADTC 520 to reconfigure the system 500 in accordance with one or more embodiments. The ADTC 520 may be a circuit of the HSMC 518 such a central HSMC. The master 502 may attempt to access a resource in one functional module circuit such as an STM timer 522, but on failure of STM timer 522, the ADTC 520 may reconfigure the system 100 to access a backup resource in another functional module such as a PIT timer 516, without impact and agnostic to the master 502. In one or more embodiments, the functional module circuit and other functional module circuit may include one or more resources of STM timers and PIT timers, respectively and these resources are illustrated.

During normal operation, a fault in the STM timer 522 is detected by the HW safety mechanism and the HSMC 518 receives a fault notification when a local HSMC in the functional module circuit with the STM timer 522 is not able to remedy the fault. The ADTC 520 configures the STM timer 522 (faulty resource) to be replaced with a PIT timer 516 (backup resource) in the other functional module circuit and configures the backup resource with equivalent configuration of the STM timer 522 based on its context. The backup memory in 250 or shadow register space in 350 of the faulty resource may indicate this context. The ATC 512 may translate an address of the faulty resource 522 in a request from the master 502 to be an address of the backup resource 516 and routes the request to the backup resource. The master interface 514 receives the request and provides the request to the backup resource 516.

In one or more embodiments, the request may be a read request or write request. The master interface 514 based on type of request does the following: For a read request, the master interface 514 receives the data from the backup resource and facilitates converting the output of the backup resource so that it appears that the faulty resource output the read data. The master interface 514 may check if direct conversion is possible. If the direct conversion is possible, then the data conversion circuit 510 performs the conversion. Otherwise, the processing core 506 performs the conversion. The conversion may be conversion of data from PIT to STM, but the conversion may be other types of conversion such as CAN protocol to Ethernet protocol, translating timing data, and translating ADC data from successive approximation register (SAR) ADC to sigma-delta (SD) ADC depending on the faulty resource which the request was originally directed and the backup resource was redirected to. The slave interface 504 receives the data of a read request and sends the data to the master 502. For a write request, the master interface 514 checks if the data of the write request to the backup resource is able to be directly converted so that it provides the data to back-up resource 516 in an expected format defined by the backup resource. If direct conversion is possible, the direct conversion circuit 510 performs the conversion. Otherwise, the processing core 506 converts the response. The master interface 514 then provides the converted write request to the backup resource for execution and might receive an acknowledgement that is provided back to the master 502. The master 502 is not aware of the internal redirection and conversion or that a different resources in different functional module circuits performed the read or write operation.

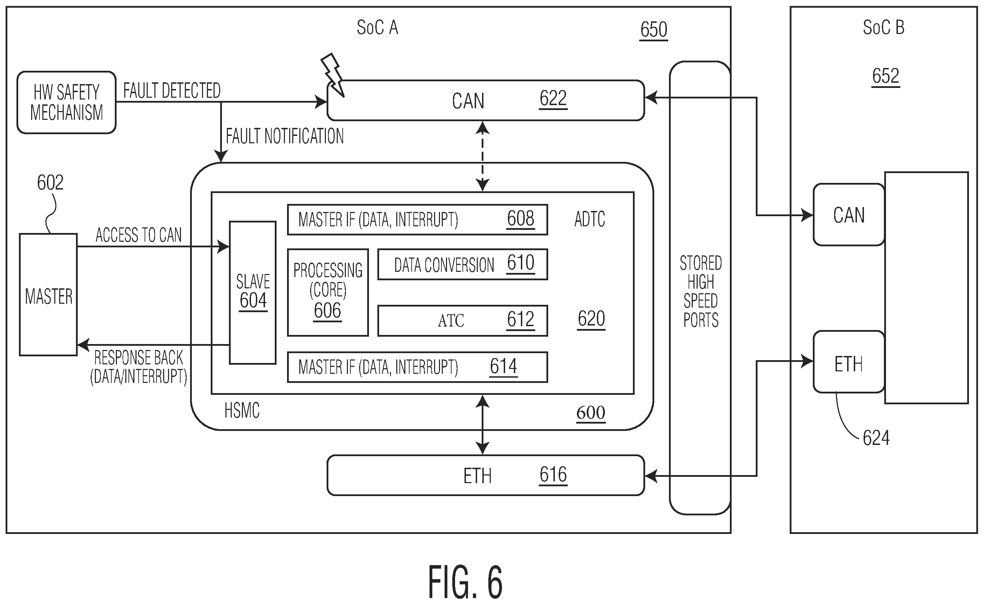

FIG. 6 illustrates another example of operation of ADTC 620 to reconfigure the system in accordance with one or more embodiments. The ADTC 620 may be a circuit of the HSMC 600 which may be a central HSMC. The reconfiguration might impact multiple SoCs in this example. During normal operation, a fault in a CAN resource 622 (faulty resource) of a functional module circuit of an SoC 650 is detected by the HW safety mechanism and the HSMC 600 receives a fault notification when a local HSMC of the functional module circuit is not able to remedy the fault. The ADTC 620 with components similar to ADTC 520 configures the faulty CAN resource 622 of the functional module circuit to be replaced with an ETH resource 616 (backup resource) in another functional module circuit in the SoC 650 and configures the backup resource with an equivalent configuration of the faulty resource based on its context. In one or more embodiments, the functional module circuit and other functional module circuit may include one or more resources of CAN controllers and Ethernet controllers, respectively and these resources are illustrated. The backup memory or shadow register space of the faulty resource may indicate this context using a mechanism like back-up memory 214 in 250 or shadow register space 306 in 250. For example, the CAN resource 622 which is faulty may be replaced with backup Ethernet resource 616. The ATC 612 may translate an address of the faulty resource in a request from the master 602 to be an address of the backup resource and routes the request to the backup resource. The master interface 614 receives the request rather than the master interface 608 and provides to the request to the backup resource 616. Further, the high speed ports may be configured to direct a request to the ETH resource 616 to the ETH resource 624 in the SoC 652. If the CAN resource 622 is faulty and requests are provided by ETH resource 616 to the ETH resource 624, the SoC 652 may need to be aware that the CAN resource 622 is faulty and the request will only come from the ETH resource 616. In other embodiments, the SoC 652 may receive a request from the SoC 650 and be arranged to redirect the request to the resource corresponding to the ETH resource 616 which sent the request. In one or more embodiments, the SoC 652 may also provide the response to the request to the ETH resource 616 which then translates any data of the response to the read request to a CAN protocol before being provided to the master 602.

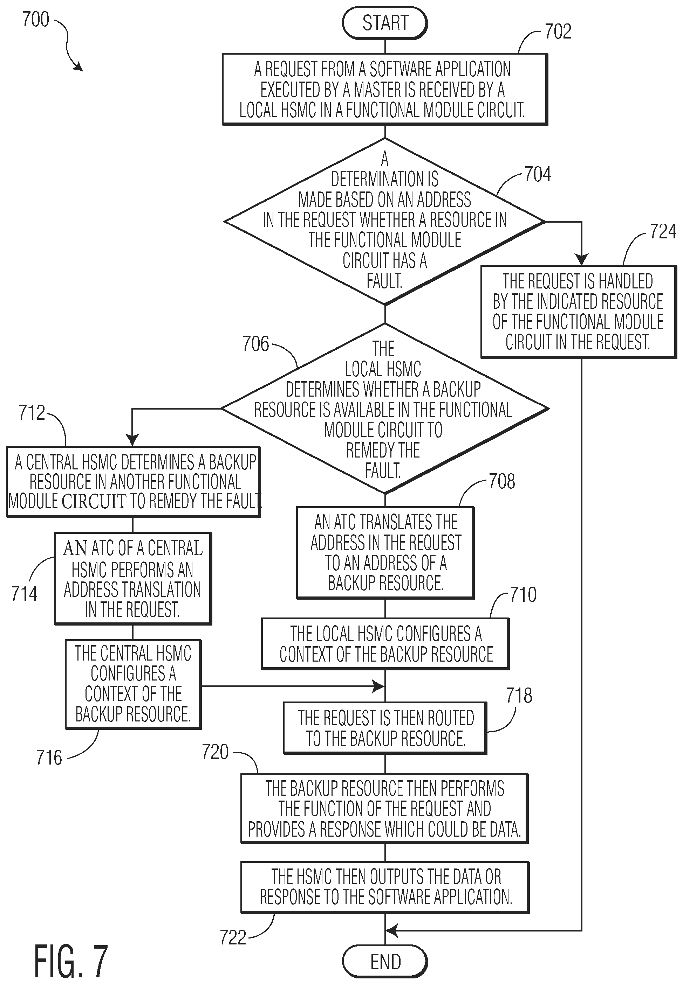

FIG. 7 is a flow chart 700 of functions associated with dynamic runtime configuration of a functional module circuit in accordance with one or more embodiments. At 702, a request from application software executed by a master is received by a local HSMC in a functional module circuit. At 704, a determination is made based on an address in the request whether a resource in the functional module circuit has a fault. If there is a fault, then at 706, the local HSMC determines whether a backup resource is available in the functional module circuit to remedy the fault. If the backup resource is available, then at 708 an ATC translates the address in the request to an address of a backup resource. At 710, the local HSMC configures a context of the backup resource. The context may be stored in a backup memory or shadow register space which is updated when the resource is not faulty and then transferred to the backup resource when the fault is detected. If the local HSMC is not able to remedy the fault, then at 712 a central HSMC determines a backup resource in another functional module to remedy the fault. At 714, an ATC of a central HSMC performs an address translation in the request. At 716, the central HSMC configures a context of the backup resource. At 718, the request is then routed to the backup resource which is in the same functional module circuit or another functional module circuit. The request may also be translated depending on functions of the faulty resource and backup resource. At 720, the backup resource then performs the function of the request and provides a response which could be data. The response may also be translated. For example, if the faulty resource was an Ethernet controller and the backup resource was an CAN controller, then then response is translated from Ethernet protocol to CAN protocol for a read operation. The HSMC then outputs the data or response to the application software at 722. If no fault is detected at 704, then the request is handled by the indicated resource of the functional module circuit in the request at 724. Advantageously, the system 100 remains available with negligible impact/no impact to the application software, no software intervention outside the HSMC is needed, and with fast reconfiguration time and while maintaining operational safety in the presence of a fault. The reconfiguration applies to various functional module circuits having resources such as CAN resources, Ethernet resources, timers resources, and ADC resources among other examples. In some embodiments, the functional circuit module may have only one resource such as an Ethernet controller or CAN controller and the resource and functional module circuit may be synonymous.

Dynamic runtime configuration includes receiving a request from an application software executed by a master; determining based on an address in the request that a resource in the functional module circuit has a fault; translating the address in the request to an address of a backup resource; configuring a context of the backup resource with context of the faulty resource; performing the request by the backup resource; and providing a response to the request to the application software, where the application software is agnostic to the fault ensuring functional availability at runtime.

In one or more first embodiments, a method for dynamic runtime configuration of a resource in a functional module circuit of a safety critical system in the presence of a fault is disclosed. The method includes: receiving a request from application software executed by a master; determining based on an address in the request that the resource in the functional module circuit has a fault; determining whether a backup resource remedies the fault; based on the backup resource remedying the fault, translating the address in the request to an address of the backup resource in the functional module circuit; configuring a context of the backup resource in the functional module circuit with context of the faulty resource; and performing the request by the backup resource; and providing a response to the request to the application software based on performing the request, wherein the application software is agnostic to the fault ensuring functional availability at runtime. In one or more embodiments, the method further includes periodically updating a context of the resource while not faulty. In one or more embodiments, the method further includes signalling a multiplexer to provide input lines to the faulty resource to the backup resource in the functional module circuit or other functional module circuit. In one or more embodiments, the method further includes signalling a multiplexer to provide an output of the backup resource in the functional module circuit or other functional module circuit to output lines in the functional module circuit or other functional module circuit. In one or more embodiments, the method further includes updating an address translation table to translate an address of the faulty resource to the address of the backup resource based on the determination of the fault. In one or more embodiments, the backup resource performs a same function as the faulty resource in a different way, and wherein each hardware safety management circuit is further arranged to convert an output of the backup resource to match an output of the faulty resource. In one or more embodiments, the functional module circuit includes one or more of a network controller, timer module, direct memory access (DMA) resource, and analog-to-digital converter (ADC) resource. In one or more embodiments, the backup resource located in the functional module circuit does not remedy the fault, the method further includes selecting a backup resource in another functional module circuit based on the backup resource in the functional module circuit not remedying the fault, translating the address in the request to an address of the backup resource in the other functional module circuit; configuring a context of the backup resource in the other functional module circuit with a context of the faulty resource; performing the request by the other backup resource in the functional module circuit; and translating data of a response to the request provided to a master from a protocol of the backup resource in the other functional module circuit to a faulty resource protocol. In one or more embodiments, the method further includes signalling a fault collection and control circuit (FCCC) to reset the application software or system when no backup resource is available to remedy the fault.

In one or more second embodiment, a safety critical system is disclosed. The system includes: a one or more local hardware based safety management circuit (HSMC) and a central hardware based safety management circuit (HSMC); a local HSMC of the one or more HSMC arranged to receive a request from an application software executed by a master; determine based on an address in the request that a resource in a functional module circuit has a fault; determine whether a backup resource in the functional module circuit remedies the fault; based on the backup resource in the functional module circuit remedying the fault, translate the address in the request to an address of the backup resource in the functional module circuit; configure a context of the backup resource in the functional module circuit with context of the faulty resource; and perform the request by the backup resource in the functional module circuit; the central HSMC arranged to based on the backup resource in the functional module circuit not remedying the fault, translate the address in the request to an address of a backup resource in another functional module circuit; configure a context of the backup resource in the other functional module circuit with a context of the faulty resource; and perform the request by the other backup resource in the functional module circuit; and wherein the local HSMC or central HSMC is arranged to provide a response to the request to the application software based on performing the request, wherein the application software is agnostic to the fault ensuring functional availability at runtime. In one or more embodiments, each hardware safety management circuit is further arranged to periodically update a context of the resource while not faulty. In one or more embodiments, the context is stored in a shadow register which shadows the context of the resource when not faulty. In one or more embodiments, each hardware safety management circuit is further arranged to signal a multiplexer to provide input lines to the faulty resource to the backup resource in the functional module circuit or other functional module circuit. In one or more embodiments, each hardware safety management circuit is further arranged to signal a multiplexer to provide an output of the backup resource in the functional module circuit or other functional module circuit to output lines in the functional module circuit or other functional module circuit. In one or more embodiments, each hardware safety management circuit is further arranged to update an address translation table to translate the address of the faulty resource to the address of the backup resource in the functional module circuit or other functional module circuit based on the determination of the fault. In one or more embodiments, the backup resource performs a same function as the faulty resource in a different way, and wherein each hardware safety management circuit is further arranged to convert an output of the backup resource to match an output of the faulty resource. In one or more embodiments, the functional module circuit includes one or more of a network controller, timer module, direct memory access (DMA) resource, and analog-to-digital converter (ADC) resource. In one or more embodiments, the functional module circuit is not memory. In one or more embodiments, the local hardware safety management circuit is further arranged to determine that no backup resource in the functional module circuit is available to remedy the fault and causing the central HSMC to select the backup resource in the other functional module circuit. In one or more embodiments, the system further includes a fault collection and control circuit (FCCC), wherein the central HSMC signals the FCCC to reset the application software or system when no backup resource is available to remedy the fault.

A few implementations have been described in detail above, and various modifications are possible. The disclosed subject matter, including the functional operations described in this specification, can be implemented in electronic circuit, computer hardware, firmware, software, or in combinations of them, such as the structural means disclosed in this specification and structural equivalents thereof: including potentially a program operable to cause one or more data processing apparatus such as a processor to perform the operations described (such as a program encoded in a non-transitory computer-readable medium, which can be a memory device, a storage device, a machine-readable storage substrate, or other physical, machine readable medium, or a combination of one or more of them).

While this specification contains many specifics, these should not be construed as limitations on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub combination. Moreover, although features may be described above as acting in certain combinations and even initially claimed as such, one or more features from a claimed combination can in some cases be excised from the combination, and the claimed combination may be directed to a sub combination or variation of a sub combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations.

Use of the phrase "at least one of" preceding a list with the conjunction "and" should not be treated as an exclusive list and should not be construed as a list of categories with one item from each category, unless specifically stated otherwise. A clause that recites "at least one of A, B, and C" can be infringed with only one of the listed items, multiple of the listed items, and one or more of the items in the list and another item not listed.

Other implementations fall within the scope of the following claims.

## Claims

1. A method for dynamic runtime configuration of a resource in a functional module circuit of a safety critical system in the presence of a fault, the method comprising:
receiving a request from application software executed by a master;
determining based on an address in the request that the resource in the functional module circuit has a fault;
determining whether a backup resource remedies the fault;
based on the backup resource remedying the fault, translating the address in the request to an address of the backup resource in the functional module circuit; configuring a context of the backup resource in the functional module circuit with context of the faulty resource; and performing the request by the backup resource; and
providing a response to the request to the application software based on performing the request, wherein the application software is agnostic to the fault ensuring functional availability at runtime.

2. The method of claim 1, further comprising periodically updating a context of the resource while not faulty.

3. The method of any preceding claim, further comprising signalling a multiplexer to provide input lines to the faulty resource to the backup resource in the functional module circuit or other functional module circuit.

4. The method of any preceding claim , further comprising signalling a multiplexer to provide an output of the backup resource in the functional module circuit or other functional module circuit to output lines in the functional module circuit or other functional module circuit.

5. The method of any preceding claim , further comprising updating an address translation table to translate an address of the faulty resource to the address of the backup resource based on the determination of the fault.

6. The method of any preceding claim , wherein the backup resource performs a same function as the faulty resource in a different way, and wherein each hardware safety management circuit is further arranged to convert an output of the backup resource to match an output of the faulty resource.

7. The method of any preceding claim , wherein the functional module circuit includes one or more of a network controller, timer module, direct memory access (DMA) resource, and analog-to-digital converter (ADC) resource.

8. The method of any preceding claim , wherein the backup resource located in the functional module circuit does not remedy the fault, the method further comprising selecting a backup resource in another functional module circuit based on the backup resource in the functional module circuit not remedying the fault, translating the address in the request to an address of the backup resource in the other functional module circuit; configuring a context of the backup resource in the other functional module circuit with a context of the faulty resource; performing the request by the other backup resource in the functional module circuit; and translating data of a response to the request provided to a master from a protocol of the backup resource in the other functional module circuit to a faulty resource protocol.

9. The method of any preceding claim , further comprising signalling a fault collection and control circuit (FCCC) to reset the application software or system when no backup resource is available to remedy the fault.

10. A safety critical system comprising:
a one or more local hardware based safety management circuit (HSMC) and a central hardware based safety management circuit (HSMC);
a local HSMC of the one or more HSMC arranged to receive a request from an application software executed by a master; determine based on an address in the request that a resource in a functional module circuit has a fault; determine whether a backup resource in the functional module circuit remedies the fault; based on the backup resource in the functional module circuit remedying the fault, translate the address in the request to an address of the backup resource in the functional module circuit; configure a context of the backup resource in the functional module circuit with context of the faulty resource; and perform the request by the backup resource in the functional module circuit;
the central HSMC arranged to based on the backup resource in the functional module circuit not remedying the fault, translate the address in the request to an address of a backup resource in another functional module circuit; configure a context of the backup resource in the other functional module circuit with a context of the faulty resource; and perform the request by the other backup resource in the functional module circuit; and
wherein the local HSMC or central HSMC is arranged to provide a response to the request to the application software based on performing the request, wherein the application software is agnostic to the fault ensuring functional availability at runtime.

11. The system of claim 10, wherein each hardware safety management circuit is further arranged to periodically update a context of the resource while not faulty.

12. The system of claim 10 or 11, wherein the context is stored in a shadow register which shadows the context of the resource when not faulty.

13. The system of any of claims 10 to 12, wherein each hardware safety management circuit is further arranged to signal a multiplexer to provide input lines to the faulty resource to the backup resource in the functional module circuit or other functional module circuit.

14. The system of claim 13, wherein each hardware safety management circuit is further arranged to signal a multiplexer to provide an output of the backup resource in the functional module circuit or other functional module circuit to output lines in the functional module circuit or other functional module circuit.

15. The system of any of claims 10 to 14, wherein each hardware safety management circuit is further arranged to update an address translation table to translate the address of the faulty resource to the address of the backup resource in the functional module circuit or other functional module circuit based on the determination of the fault.
